# EUROPÄISCHE PATENTSCHRIFT

(11) **EP 1 713 844 B1**
(45) Veröffentlichungstag und Bekanntmachung des Hinweises auf die Patenterteilung: **30.05.2007**
(21) Anmeldenummer: 05715714.1
(22) Anmeldetag: 03.03.2005
(51) Int. Cl.: C08F 283/12, C08F 290/06, C08F 290/14

(54) **VERFAHREN ZUR HERSTELLUNG VON SILIKONHALTIGEN MISCHPOLYMERISATEN**
METHOD FOR PRODUCTION OF MIXED POLYMERS CONTAINING SILICON
PROCEDE DE PRODUCTION DE POLYMERES MELANGES CONTENANT DE LA SILICONE

(30) Priorität: 11.03.2004 DE 102004011995
(43) Veröffentlichungstag der Anmeldung: 25.10.2006
(73) Patentinhaber: Wacker Chemie AG, 81737 München (DE)
(72) Erfinder: STARK, Kurt, 01365 Weilersbach (DE); HÖGL, Christian, 84367 Reut (DE)
(74) Vertreter: Schuderer, Michael
(86) Internationale Anmeldenummer: PCT/EP2005/002271
(87) Internationale Veröffentlichungsnummer: WO 2005/087827

(56) Entgegenhaltungen:
- EP-A- 0 614 924
- US-A- 3 758 425
- US-A- 3 985 824
- US-A- 5 686 531

## Beschreibung

Die Erfindung betrifft ein Verfahren zur Herstellung von silikonhaltigen Mischpolymerisaten aus ethylenisch ungesättigtem Organomonomer und Silikonmakromer in Form deren wässrigen Polymerdispersionen oder in Wasser redispergierbaren Polymerpulvern.

Aus dem Stand der Technik sind verschiedene Verfahren zur Herstellung von Polymerdispersionen von mit Silikonen modifizierten Copolymerisaten bekannt. In der EP-A 1308468 werden solche Copolymerisate mit einem Verfahren hergestellt, bei dem der gesamte Silikonanteil und eine Teilmenge der Monomere in wässriger Emulsion vorgelegt werden und in Gegenwart von wasserlöslichem Initiator polymerisiert werden. Die EP-A 352339 beschreibt ein Lösungspolymerisationsverfahren unter Vorlage des Silikonanteils im Lösungsmittel und kontinuierlicher Dosierung eines Gemisches aus Monomeren und öllöslichem Initiator. Aus der EP-A 771826 ist ein Verfahren zur Herstellung eines vernetzten Silikon-Copolymerlatex bekannt, wobei zunächst Wasser, Monomer, Emulgator und wasserlöslicher Initiator vorgelegt werden, die Reaktion gestartet wird, weiteres Monomer langsam zudosiert wird, und schließlich das vernetzende Silikon, das kurzkettig und mehrfach ungesättigt ist, zusammen mit dem restlichen Monomer zugegeben wird.

In der EP-A 614924 werden in der Emulsionspolymerisation nur kurzkettige Silikonmakromere eingesetzt, da längerkettige Silikonmakromere nicht vernünftig mit den organischen Monomeren polymerisieren. In der US-A 6602949 wird die Herstellung von Silikon-Organopolymer-Pfropfpolymerisaten beschrieben, wobei ein verzweigtes, kurzkettiges Silikon mit dendrimerer Struktur mit ethylenisch ungesättigtem Rest, ethylenisch ungesättigte Monomere und radikalisch polymerisierbarer Emulgator in Gegenwart eines öllöslichen Initiators umgesetzt werden. Durch die dendrimere Struktur des kurzkettigen Silikonmakromers wird die Copolymerisation mit organischen Monomeren verbessert. Es wird in Vergleichsbeispielen gezeigt, dass langkettige Silikonmakromere (ohne dendrimere Struktur) nur bis zu maximal 75 % mit organischen Monomeren polymerisiert haben und eine große Menge unumgesetztes Silikonmakromer übrig bleibt. In der EP-A 810243 und JP-A 05-009248 werden Silikonmakromere mit organischen Monomeren in Emulsion polymerisiert, wobei ausschliesslich mit öllöslichem Initiator gearbeitet wird. Nachteilig bei den Verfahren unter Initiierung mit öllöslichem Initiator ist die unzureichende Stabilität der daraus resultierenden Dispersionen, die sehr stark zur Phasentrennung neigen.

Aus der US-A 5618879 ist die Copolymerisation einer Mischung aus Silikonmakromer und Monomer, welche mit anionischem Emulgator in Wasser emulgiert ist, beschrieben, wobei die Polymerisation mit wasserlöslichem Initiator initiiert wird. In der JP-A 05-140255 ist das Silikonmakromer im Organomonomer gelöst, wird mit anionischem Emulgator in Wasser emulgiert und mit wasserlöslichem Initiator die Polymerisation gestartet. Nachteilig ist auch hierbei, dass ein erheblicher Anteil, von über 20 %, des Silikonmakromers nicht copolymerisiert wird.

Den aus dem Stand der Technik bekannten Verfahren ist gemeinsam, dass die Copolymerisation der Silikonmakromere mit organischen Monomeren in Emulsion stets nur unzureichend erfolgt. Dies führt dazu, dass freies Silikon in der Dispersion verbleibt, mit entsprechend nachteiligen Folgen: Das Silikon migriert aus Beschichtungen oder Filmen. Die Dispersion kann koagulieren. Die Teilchengrößenverteilung ist inhomogen. Zudem wird durch die Tendenz zur Phasenseparation die Lagerstabilität negativ beeinflußt.

Aufgabe der Erfindung war es daher, Dispersionen und Redispersionspulver von Mischpolymerisaten mit hohem Gehalt an Silikon durch Emulsionspolymerisation von Silikonmakromeren mit organischen Monomeren herzustellen, wobei die Anknüpfung des Silikonmakromers deutlich effektiver gegenüber dem bisherigen Stand der Technik erfolgen sollte.

Gegenstand der Erfindung ist ein Verfahren zur Herstellung von silikonhaltigen Mischpolymerisaten aus ethylenisch ungesättigtem Organomonomer und Silikonmakromer in Form deren wässrigen Polymerdispersionen oder in Wasser redispergierbaren Polymerpulvern mittels radikalisch initiierter Polymerisation in wässrigem Medium und gegebenenfalls Trocknung der damit erhältlichen Polymerdispersion, dadurch gekennzeichnet, dass der Anteil an Silikonmakromer und ein Teil der ethylenisch ungesättigten Organomonomere vorgelegt wird und die Polymerisation in Gegenwart eines öllöslichen Initiators mit einer Löslichkeit in Wasser unter Normalbedingungen von <1 Gew.-% gestartet wird, und anschließend der Restanteil des ethylenisch ungesättigten Organomonomers und ein wasserlöslicher Initiator mit einer Löslichkeit in Wasser unter Normalbedingungen von >10 Gew.-% zugegeben werden.

Bei der Polymerisation werden als ethylenisch ungesättigte Organomonomere ein oder mehrere Monomere eingesetzt aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide. Im allgemeinen werden 5 bis 95 Gew.-% der ethylenisch ungesättigten Organomonomere eingesetzt, vorzugsweise 50 bis 95 Gew.-%, jeweils bezogen auf das Gesamtgewicht des Mischpolymerisats.

Geeignete Vinylester sind Vinylester von unverzweigten oder verzweigten Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 13 C-Atomen, beispielsweise VeoVa9^{R} oder VeoVa10^{R} (Handelsnamen der Firma Resolution Performance Products). Besonders bevorzugt ist Vinylacetat.

Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat.

Geeignete Diene sind 1,3-Butadien und Isopren. Beispiele für copolymerisierbare Olefine sind Ethen und Propen. Als Vinylaromaten können Styrol und Vinyltoluol copolymerisiert werden. Aus der Gruppe der Vinylhalogenide werden üblicherweise Vinylchlorid, Vinylidenchlorid oder Vinylfluorid, vorzugsweise Vinylchlorid, eingesetzt.

Gegebenenfalls können noch 0.05 bis 30 Gew.-%, bezogen auf das Gesamtgewicht der ethylenisch ungesättigten Organomonomere, Hilfsmonomere copolymerisiert werden. Beispiele für Hilfsmonomere sind ethylenisch ungesättigte Mono- und Dicarbonsäuren oder deren Salze, vorzugsweise Crotonsäure, Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Als Hilfsmonomere geeignet sind auch kationische Monomere wie Diallyldimethylammoniumchlorid (DADMAC), 3-Trimethylammoniumpropyl(meth)acrylamidchlorid (MAPTAC) und 2-Trimethylammoniumethyl(meth)acrylatchlorid. Ferner sind als Hilfsmonomere geeignet Vinylether, Vinylketone, weitere vinylaromatische Verbindungen, die auch Heteroatome besitzen können.

Geeignete Hilfsmonomere sind auch polymerisierbare Silane bzw. Merkaptosilane. Bevorzugt sind gamma-Acryl- bzw. gamma-Methacryloxypropyltri(alkoxy)silane, α-Methacryloxymethyltri(alkoxy)silane, gamma-Methacryloxypropyl-methyldi(alkoxy)silane, Vinylalkyldi(alkoxy)silane und Vinyltri(alkoxy)silane, wobei als Alkoxygruppen beispielsweise Methoxy-, Ethoxy-, Methoxyethylen, Ethoxyethylen-, Methoxypropylenglykolether- oder Ethoxypropylenglykolether-Reste eingesetzt werden können. Beispiele hierfür sind Vinyltrimethoxysilan, Vinyltriethoxysilan, Vinyltripropoxysilan, Vinyltriisopropoxysilan, Vinyltris-(1-methoxy)-isopropoxysilan, Vinyltributoxysilan, Vinyltriacetoxysilan, 3-Methacryloxypropyltrimethoxysilan, 3-Methacryloxypropylmethyldimethoxysilan, Methacryloxymethyltrimethoxysilan, 3-Methacryloxypropyl-tris(2-methoxyethoxy)silan, Vinyltrichorsilan, Vinylmethyldichlorsilan, Vinyltris-(2-methoxyethoxy)silan, Trisacetoxyvinylsilan, 3-(Triethoxysilyl)-propylbernsteinsäureanhydridsilan. Bevorzugt werden auch 3-Mercaptopropyltriethoxysilan, 3-Mercaptopropyltrimethoxysilan und 3-Mercaptopropylmethyldimethoxysilan.

Weitere Beispiele sind funktionalisierte (Meth)acrylate und funktionalisierte Allyl- und Vinylether, insbesondere Epoxyfunktionelle wie Glycidylacrylat, Glycidylmethacrylat, Allylglycidether, Vinylglycidether, oder Hydroxyalkyl-funktionelle wie Hydroxyethyl(meth)acrylat, oder substituierte oder unsubstituierte Aminoalkyl(meth)acrylate, oder cyclische Monomere, wie N-Vinylpyrrolidon; oder N-Vinylformamid.

Weitere Beispiele für geeignete Hilfsmonomere sind vorvernetzende Comonomere wie mehrfach ethylenisch ungesättigte Comonomere, beispielsweise Divinyladipat, Divinylbenzol, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

Geeignete Silikonmakromere sind lineare, verzweigte und cyclische Silikone (Polysiloxane) mit mindestens 10 Siloxanwiederholungseinheiten und mit mindestens einer radikalisch polymerisierbaren funktionellen Gruppe. Vorzugsweise beträgt die Kettenlänge 10 bis 1000 Siloxanwiederholungseinheiten. Ethylenisch ungesättigte Gruppen wie Alkenylgruppen werden als polymerisierbare, funktionelle Gruppen bevorzugt. Der Silikonanteil im Mischpolymerisat beträgt vorzugsweise 5 bis 50 Gew.-%, besonders bevorzugt 20 bis 50 Gew.-%, jeweils bezogen auf das Gesamtgewicht des Mischpolymerisats.

Bevorzugte Silikonmakromere sind Silikone mit der allgemeinen Formel R¹ₐR₃₋ₐSiO (SiR₂O)ₙSiR₃₋ₐR¹ₐ, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, und n = 10 bis 1000 beträgt.

In der allgemeinen Formel R¹ₐR₃₋ₐSiO(SiR₂O)ₙSiR₃₋ₐR¹ₐ sind Beispiele für Reste R Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste wie der n-Hexylrest, Heptylreste wie der n-Heptylrest, Octylreste wie der n-Octylrest und iso-Octylreste wie der 2,2,4-Trimethylpentylrest, Nonylreste wie der n-Nonylrest, Decylreste wie der n-Decylrest, Dodecylreste wie der n-Dodecylrest, und Octadecylreste wie der n-Octadecylrest, Cycloalkylreste wie Cyclopentyl-, Cyclohexyl-, Cycloheptyl- und Methylcyclohexylreste. Bevorzugt handelt es sich bei dem Rest R um einen einwertigen Kohlenwasserstoffrest mit 1 bis 6 Kohlenstoffatomen, wie Methyl-, Ethyl-, n-Propyl-, Isopropyl-, n-Butyl-, sec-Butyl, Amyl- und Hexyl-Rest, wobei der Methylrest besonders bevorzugt ist.

Bevorzugte Alkoxyreste R sind solche mit 1 bis 6 Kohlenstoffatomen wie Methoxy-, Ethoxy-, Propoxy- und n-Butoxyrest, welche gegebenenfalls noch mit Oxyalkylenresten wie Oxyethylen- oder Oxymethylen-Resten substituiert sein können. Besonders bevorzugt werden der Methoxy- und Ethoxyrest. Die genannten Alkylreste und Alkoxyreste R können gegebenenfalls auch substituiert sein, beispielsweise mit Halogen, Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Alkoxysilylgruppen und Hydroxygruppen.

Geeignete polymerisierbare Gruppen R¹ sind Alkenylreste mit 2 bis 8 C-Atomen. Beispiele für solche polymerisierbare Gruppen sind die Vinyl-, Allyl-, Butenyl-, sowie Acryloxyalkyl- und Methacryloxyalkyl-Gruppe, wobei die Alkylreste 1 bis 4 C-Atome enthalten. Bevorzugt werden die Vinylgruppe, 3-Methacryloxypropyl-, Acryloxymethyl- und 3-Acryloxypropyl-Gruppe.

Bevorzugt werden α,ω-Divinyl-Polydimethylsiloxane, α,ω-Di-(3-acryloxypropyl)-Polydimethylsiloxane, α,ω-Di-(3-methacryloxypropyl)-Polydimethylsiloxane. Bei den nur einfach mit ungesättigten Gruppen substituierten Silikonen sind α-Monovinyl-Polydimethylsiloxane, α-Mono-(3-acryloxypropyl)-Polydimethylsiloxane, α-Mono-(acryloxymethyl)-Polydimethylsiloxane, α-Mono-(3-methacryloxypropyl)-Polydimethylsiloxane bevorzugt. Bei den monofunktionellen Polydimethylsiloxanen befindet sich am anderen Kettenende ein Alkyl- oder Alkoxyrest, beispielsweise ein Methyl- oder Butylrest.

Bevorzugt sind auch Gemische von linearen oder verzweigten Divinyl-Polydimethylsiloxanen mit linearen oder verzweigten Monovinyl-Polydimethylsiloxanen und/oder unfunktionalisierten Polydimethylsiloxanen (letztere besitzen keine polymerisierbare Gruppe). Die Vinylgruppen befinden sich am Kettenende. Beispiele für solche Gemische sind Silikone der lösemittelfreien Dehesive^{®}-6-Reihe (verzweigt) oder Dehesive^{®}-9-Reihe (unverzweigt) der Wacker-Chemie GmbH. Bei den binären oder ternären Gemischen beträgt der Anteil der unfunktionellen Polydialkylsiloxane bis zu 15 Gew.-%, vorzugsweise bis zu 5 Gew.-%; der Anteil der monofunktionellen Polydialkylsiloxane bis zu 50 Gew.-%; und der Anteil der difunktionellen Polydialkylsiloxane mindestens 50 Gew.-%, vorzugsweise mindestens 60 Gew.-%, jeweils bezogen auf das Gesamtgewicht des Silikonmakromers.

Am meisten bevorzugt als Silikonmakromere werden α,ω-Divinyl-Polydimethylsiloxane.

Die Mischpolymerisate werden mittels radikalischer Polymerisation in wässrigem Medium, vorzugsweise Emulsionspolymerisation, hergestellt. Die Polymerisation wird üblicherweise in einem Temperaturintervall von 20°C bis 100°C durchgeführt, insbesondere zwischen 40°C und 80°C. Die Initiierung erfolgt mittels Radikalbildner (Initiatoren), welcher vorzugsweise in Mengen von 0.01 bis 5.0 Gew.-%, bezogen auf das Gesamtgewicht aus Silikonmakromer und Organomonomer, eingesetzt werden. Wasserlöslicher Initiator und öllöslicher Initiator können als Gemisch oder getrennt voneinder zugegeben werden, und werden in einem Gewichtsverhältnis von wasserlöslichem zu öllöslichem Initiator von 10 : 1 bis 1: 10 eingesetzt, vorzugsweise 1 : 1 bis 1 : 5.

Als Initiatoren werden einerseits wasserlösliche Initiatoren, deren Löslichkeit in Wasser unter Normalbedingungen > 10 Gew.-% beträgt, eingesetzt. Beispielweise wasserlösliche, anorganische Peroxide wie Ammonium-, Natrium-, Kaliumperoxodisulfat oder Wasserstoffperoxid entweder alleine oder in Kombination mit Reduktionsmitteln wie Natriumsulfit, Natriumhydrogensulfit, Natriumformaldehydsulfoxylat oder Ascorbinsäure. Es können auch wasserlösliche organische Peroxide, beispielsweise t-Butylhydroperoxid (TBHP), Cumolhydroperoxid, üblicherweise in Kombination mit Reduktionsmittel, eingesetzt werden, oder aber auch wasserlösliche Azoverbindungen.

Als öllösliche Initiatoren bezeichnet man solche, deren Löslichkeit in Wasser unter Normalbedingungen < 1 Gew.-% beträgt. Als Vertreter der Gruppe öllöslicher Initiatoren werden Initiatoren wie t-Butylperoxy-2-ethylhexanoat (TBPEH), t-Butylperoxypivalat (PPV), t-Butylperoxyneodecanoat (TBPND), Dibenzoylperoxid, t-Amylperoxypivalat (TAPPI), Di-(2-ethylhexyl)peroxydicarbonat (EHPC), 1,1-Bis(t-Butylperoxy)-3,3,5-trimethylcyclohexan und Di-(4-t-Butylcyclohexyl)peroxydicarbonat eingesetzt. Geeignete öllösliche Initiatoren sind auch Azoinitiatoren wie Azobisisobutyronitril (AIBN).

Bei der Copolymerisation mit gasförmigen Monomeren wie Ethylen und Vinylchlorid wird unter Druck gearbeitet, im allgemeinen zwischen 1 und 100 bar_{abs.}.

Zur Stabilisierung der Dispersion können anionische und nichtionische Emulgatoren sowie Schutzkolloide verwendet werden, wobei diese auch polymerisierbare Gruppen enthalten können. Bevorzugt werden nichtionische oder anionische Emulgatoren eingesetzt, besonders bevorzugt eine Mischung aus nichtionischen und anionischen Emulgatoren. Als nichtionische Emulgatoren werden bevorzugt Kondensationsprodukte von Ethylenoxid oder Propylenoxid mit linearen oder verzweigten Alkoholen mit 8 bis 18 Kohlenstoffatomen, Alkylphenolen oder linearen oder verzweigten Carbonsäuren von 8 bis 18 Kohlenstoffatomen eingesetzt, sowie Blockcopolymere von Ethylenoxid und Propylenoxid eingesetzt. Geeignete anionische Emulgatoren sind beispielsweise Alkylsulfate, Alkylsulfonate, Alkylarylsulfate, sowie Sulfate oder Phosphate von Kondensationsprodukten des Ethylenoxides mit linearen oder verzweigten Alkylalkoholen und mit 3 bis 60 EO-Einheiten, Alkylphenole, und Mono- oder Diester der Sulfobernsteinsäure. Die Emulgatormenge beträgt 0.1 bis 30 Gew.-%, bezogen auf das Gesamtgewicht der eingesetzten Organomonomere und Silikonmakromere.

Gegebenenfalls können noch Schutzkolloide eingesetzt werden. Beispiele für geeignete Schutzkolloide sind Polyvinylalkohole mit einem Gehalt von 75 bis 95 Mol-%, bevorzugt 84 bis 92 Mol-%, vinylalkoholeinheiten; Poly-N-Vinylamide wie Polyvinylpyrrolidone; Polysaccharide wie Stärken, sowie Cellulosen und deren Carboxymethyl-, Methyl-, Hydroxyethyl-, Hydroxypropyl-Derivate; synthetische Polymere wie Poly(meth)acrylsäure, Poly(meth)acrylamid. Ferner können auch Polyglykolether wie Polyethylenglykol, Polypropylenglykol oder gemischte Polyalkylenoxide mit Ethylenoxid- und Propylenoxid-Gruppen eingesetzt werden. Besonders bevorzugt wird der Einsatz der genannten Polyvinylalkohole. Bevorzugt wird auch der Einsatz von Polyalkylenoxiden, die mindestens eine, höchstens aber zwei polymerisierbare Gruppen wie z.B. die Vinyl- oder die Allyl-Gruppe besitzen. Die Schutzkolloide werden im allgemeinen in einer Menge von 0.1 bis 30 Gew.-%, bezogen auf das Gesamtgewicht der eingesetzten Organomonomere und Silikonmakromere, eingesetzt.

Gegebenenfalls können zur Steuerung des Molekulargewichts die üblichen Regler verwendet werden, beispielsweise Alkohole wie Isopropanol, Aldehyde wie Acetaldehyd, chlorhaltige Verbindungen, Mercaptane wie n-Dodecylmercaptan, t-Dodecylmercaptan, Mercaptopropionsäure(ester). Zur Einstellung des pH-Wertes können bei der Herstellung der Dispersion pH-regulierende Verbindungen wie Natriumacetat oder Ameisensäure eingesetzt werden.

Die Polymerisation kann mit oder ohne Verwendung von Saatlatices, durchgeführt werden. Es wird ein Teil der Silikonmakromere und Organomonomere vorgelegt und der Rest dosiert (Semibatch-Prozess). Der Anteil an wasserlöslichem und öllöslichem Initiator wird getrennt zugegeben werden.

Erfindungsgemäß wird der gesamte Anteil an Silikonmakromer und ein Teil der ethylenisch ungesättigten Organomonomere vorgelegt und die Polymerisation in Gegenwart eines öllöslichen Initiators gestartet, und anschließend der Restanteil des ethylenisch ungesättigten Organomonomers und der wasserlösliche Initiator zugegeben. Der Anteil an ethylenisch ungesättigtem Organomonomer in der Vorlage beträgt vorzugsweise 5 bis 60 Gew.-%, besonders bevorzugt 5 bis 50 Gew.-% . Vorzugsweise wird der öllösliche Initiator ebenfalls komplett vorgelegt. Die Vorlage wird vorzugsweise bis zu einem Umsatz von 10 bis 100 %, besonders bevorzugt 30 bis 80 %, auspolymerisiert und danach die restlichen Monomeren zudosiert und mit Hilfe wasserlöslicher Initiatoren, die ebenfalls zudosiert werden, polymerisiert.

Die Emulgatoren und Schutzkolloide können zur Herstellung der Dispersion vorgelegt werden, oder zudosiert werden, oder es wird ein Teil vorgelegt und der Rest dosiert. Dabei können die oberflächenaktiven Substanzen auch allein oder als Voremulsion mit den Comonomeren dosiert werden.

Bei der Copolymerisation von gasförmigen Monomeren wie Ethylen wird die gewünschte Menge durch die Einstellung eines bestimmten Drucks eingebracht. Der Druck, mit dem das gasförmige Monomer eingebracht wird, kann anfangs auf einen bestimmten Wert eingestellt werden und sich während der Polymerisation abbauen, oder der Druck wird während der gesamten Polymerisation konstant gelassen. Letztere Ausführungsform ist bevorzugt.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere und weitere flüchtige, nicht wässrige Bestandteile der Dispersion können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wässrigen Dispersionen haben einen Feststoffgehalt von 20 bis 70 Gew.-%, vorzugsweise von 25 bis 65 Gew.-%. Die Einstellung des Festgehaltes kann auch durch nachträgliche Zugabe von Wasser erfolgen, nachdem die Emulsionspolymerisation abgeschlossen wurde. Zur Herstellung von in Wasser redispergierbaren Polymerpulvern werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Verdüsungshilfe in einer Gesamtmenge von 3 bis 30 Gew.-%, bezogen auf die polymeren Bestandteile der Dispersion, eingesetzt. Geeignete Verdüsungshilfen sind die bereits genannten Schutzkolloide. Bei der Verdüsung hat sich vielfach ein Gehalt von bis zu 1.5 Gew.-% Antischaummittel, bezogen auf das Basispolymerisat, als günstig erwiesen. Zur Verbesserung der Verblockungsstabilität kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate.

Mit der erfindungsgemäßen Vorgehensweise werden silikonhaltige Mischpolymerisate zugänglich, die sich durch eine vollständige oder nahezu vollständige Anknüpfung des Silikonanteils an den organischen Anteil auszeichnen. Aus einem getrockneten Dispersionsfilm ist die Extraktion von freiem Silikonmakromer nicht mehr möglich oder nur sehr minimal. Die damit erhaltenen Dispersionen besitzen eine Reihe von Vorteilen: Vorteilhafte Teilchengrößenverteilung, Lagerstabilität, keine Phasentrennung, kein Ausschwitzen des Silikons, keine Stippenbildung und eine exzellente Filmbildung. Es werden nicht schmierende Filme mit einer hohen Kohäsion und zum Teil - je nach Polymerisationsverfahren - hochelastischem mechanischen Verhalten erhalten.

Bevorzugt werden die nachfolgend genannten Zusammensetzungen der Mischpolymerisate:
Polymerisate von Vinylacetat mit Silikonmakromeren; Vinylester-Copolymerisate von Vinylacetat mit weiteren Vinylestern wie Vinyllaurat, Vinylpivalat, Vinyl-2-ethylhexansäureester, Vinylester einer alpha-verzweigten Carbonsäure, insbesondere Versaticsäurevinylester (VeoVa9R, VeoVa10R) und Silikonmakromeren;
Vinylester-Ethylen-Copolymerisate, wie Vinylacetat-Ethylen-Copolymerisate, welche gegebenenfalls noch weitere Vinylester wie Vinyllaurat, Vinylpivalat, Vinyl-2-ethylhexansäureester, Vinylester einer alpha-verzweigten Carbonsäure, insbesondere Versaticsäurevinylester (VeoVa9R, VeoVa10R), oder Fumarsäure- oder Maleinsäurediester enthalten, mit Silikonmakromeren;
Vinylester-Ethylen-Vinylchlorid-Copolymerisate, wobei als Vinylester bevorzugt Vinylacetat und/oder Vinylpropionat und/oder ein oder mehrere copolymerisierbare Vinylester wie Vinyllaurat, Vinylpivalat, Vinyl-2-ethylhexansäureester, Vinylester einer alpha-verzweigten Carbonsäure, insbesondere Versaticsäurevinylester (VeoVa9R, VeoVa10R), enthalten sind, mit Silikonmakromeren;
Vinylester-Acrylsäureester-Copolymerisate mit Vinylacetat und/oder Vinyllaurat und/oder Versaticsäure-Vinylester und Acrylsäureester, insbesondere Butylacrylat oder 2-Ethylhexylacrylat, welche gegebenenfalls noch Ethylen enthalten, mit Silikonmakromeren;
Acrylsäureester-Copolymerisate mit n-Butylacrylat und/oder 2-Ethylhexylacrylat mit Silikonmakromeren;
Methylmethacrylat-Copolymerisate mit Butylacrylat und/oder 2-Ethylhexylacrylat, und/oder 1,3-Butadien mit Silikonmakromeren;
Styrol-1,3-Butadien-Copolymerisate und Styrol-(Meth)Acrylsäureester-Copolymerisate wie Styrol-Butylacrylat, Styrol-Methylmethacrylat-Butylacrylat oder Styrol-2-Ethylhexylacrylat mit Silikonmakromeren, wobei als Butylacrylat n-, iso-, tert-Butylacrylat eingesetzt werden kann.

Am meisten bevorzugt werden Vinylester-Silikonmakromer-Copolymerisate, insbesondere Vinylacetat-Silikonmakromer-Copolymerisate; sowie Copolymerisate von Vinylacetat und Ethylen mit Silikonmakromeren, wobei der Silikonmakromeranteil sich von α,ω-Divinyl-Polydimethylsiloxan, α,ω-Di-(3-acryloxypropyl)-Polydimethylsiloxan oder α,ω-Di-(3-methacryloxypropyl)-Polydimethylsiloxan ableitet, und wobei jeweils zusätzlich noch Hilfsmonomeranteile in den angegebenen Mengen enthalten sein können.

Die Mischpolymerisate in Form deren wässrigen Dispersionen und in Wasser redispergierbaren Pulver eignen sich zur Anwendung in Klebemitteln, Beschichtungsmitteln, auch als Schutzbeschichtung z.B. für Metalle, Folien, Holz oder Releasebeschichtung oder zur Papierbehandlung, z.B. im Tissue-Bereich, als Bindemittel zur Verfestigung von Fasern oder anderen partikulären Materialien. Sie können auch im Textilbereich zur Textilbehandlung, Textilbeschichtung, Textilausrüstung oder Textil-Finishing, sowie im Bereich Fabric Care eingesetzt werden. Sie eignen sich auch als Modifizierungsmittel und als Hydrophobierungsmittel. Sie können ferner im Bereich Polish vorteilhaft eingesetzt werden. Darüberhinaus können die Dispersionen als Trennmittel verwendet werden. Geeignet sind sie auch als Bindemittel im Baubereich für Anstrich-, Klebe- und Beschichtungsmittel, beispielsweise in Fliesenklebern und Vollwärmeschutzklebemittel, und insbesondere für die Anwendung in emissionsarmen Kunststoffdispersionsfarben und Kunststoffdispersionsputzen, sowohl für den Innenbereich wie den Aussenbereich. Sie können aber auch als Additiv, z.B. bei Lacken oder bei kosmetischen Formulierungen, wie Haarsprays, Cremes oder Shampoos, verwendet werden.

Die nachfolgenden Beispiele dienen zur weiteren Erläuterung der Erfindung, ohne diese in irgendeiner Weise einzuschränken.

### Herstellung der Polymerdispersionen

### Rohstoffe:

Genapol X050 und X060:
C₁₃-Oxoalkoholethoxylat mit 5 und 6 EO (Hersteller: Clariant). PG A20-20:
Polyglykolether mit 20 EO (Ethylenoxid) und 20 PO (Propylenoxid), endgruppenfunktionalisiert mit einer Allylgruppe (Hersteller: Clariant)

Texapon K12:
Na-Dodecylsulfat
Brüggolith:
Formaldehydnatriumsulfoxylat (Reduktionsmittel) Polyvinylalkohol W25/140:
Polyvinylalkohol mit einer Viskosität von ca. 25 mPas (20°C, 4 %-ige Lösung, gemessen nach Höppler) und einer Verseifungszahl von 140 (mg KOH/g Polymer) (Hydrolysegrad 88 Mol-%). Hersteller: Wacker Specialties
PDMS-Mischung (Wacker Dehesive^{®} 929):
Gemisch dreier Polydimethylsiloxane mit ca. 100 SiOMe₂-Einheiten, das 5 Gew.-% unfunktionalisiertes Polydimethylsiloxan, 20 Gew.-% α-monovinyl-funktionalisiertes Polydimethylsiloxan und 75 Gew.-% α,ω-divinyl-funktionalisiertes Polydimethylsiloxan enthält.
VIPO 200, 300, 500:
Polydimethylsiloxane mit ca. 100, 133 und 177 SiOMe₂-Wiederholungseinheiten, α,ω-Divinylfunktionalisiert. Hersteller: Wacker-Chemie GmbH

### Vergleichsbeispiel 1: (kein öllöslicher Initiator)

In einem 20 Liter Druckautoklaven wurden 1.91 kg Wasser, 2.53 kg W 25/140(Polyvinylalkohol, 10 %-ige wässrige Lösung), 96.06 g Genapol X 060 (100 %-ig), 10.94 g Texapon K12, 3.96 g Natriumacetat, 606.72 g Vinylacetat und 404.48 g PDMS-Mischung vorgelegt. Mit 10 %-iger Ameisensäure wurde auf pH = 5 eingestellt. Ferner wurden 10 ml Trilon B (EDTA; 2 %-ige wässrige Lösung) und 31 ml Eisenammonsulfat (1 %-ige Lösung) zugegeben. Der Kessel wurde auf 70°C aufgeheizt und es wurden 8 bar Stickstoff aufgedrückt. Sobald sich der Reaktor im thermischen Gleichgewicht befand, wurde eine 5.8 %-ige Ammoniumpersulfatlösung (APS-Lösung) mit 42 g pro Stunde und eine 2.68 %-ige Natriumsulfitlösung mit 88 g pro Stunde eingefahren. 25 Minuten später wurde begonnen, eine Mischung von 2.43 kg Vinylacetat und 1.62 kg PDMS-Mischung mit einer Rate von 1010 g pro Stunde zu dosieren (Monomerdosierung).
Gleichzeitig wurde eine Emulgatordosierung mit einer Dosierleistung von 300 g pro Stunde eingefahren. Die Emulgatordosierung enthielt 758.40 g Wasser, 384.26 g Genapol X 060, 15.86 g Natriumacetat und 43.76 g Texapon K12. Die Gesamtdosierzeit für die Monomerdosierung belief sich auf 4 Stunden, die Emulgatordosierung wurde ebenfalls auf 4 Stunden dosiert.
20 min nach dem Reaktionsbeginn wurde die APS-Dosierung auf 63 g pro Stunde, die Na-Sulfit-Dosierung auf 131 g pro Stunde erhöht.
Nach dem Ende der Monomerdosierung bzw. Emulgatordosierung wurde die APS- und Na-Sulfitdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert.
Dispersionsanalysen:
Feststoffgehalt: 44.9 %. pH-Wert: 5.0; Brookfield-Viskosität 20 (Spindel 4): 860 mPas; MFT: 0°C; Glasübergangstemperatur Tg: 16.7°C; mittlere Teilchengröße: 422.3 nm (Nanosizer) Coulter: Dn 0.274; Dv 0.891; Oberfläche 14.0 m²
Soxhlet - Extraktion: Rückstand vollständig eingedampftes Eluat 2.14 g = 42.8 % (extrahiert aus 5 g eines getrockneten Dispersionsfilms).

### Vergleichsbeispiel 2: (kein öllöslicher Initiator)

In einem 20 Liter Druckautoklaven wurden 1.29 kg Wasser, 2.67 kg W 25/140(Polyvinylalkohol, 10 %-ige wässrige Lösung), 101.55 g Genapol X 050 (100 %-ig), 115.66 g Texapon K12 (10 %-ige wässrige Lösung), 4.19 g Natriumacetat, 641.34 g Vinylacetat und 427.56 g Polydimethylsiloxan (VIPO 300) vorgelegt. Mit 10 %-iger Ameisensäure wurde auf pH = 5 eingestellt. Ferner wurden 10 ml Trilon B (EDTA; 2 %-ige wässrige Lösung) und 31 ml Eisenammonsulfat (1 %-ige Lösung) zugegeben. Der Kessel wurde auf 70°C aufgeheizt und es wurden 8 bar Stickstoff aufgedrückt. Sobald sich der Reaktor im thermischen Gleichgewicht befand, wurde eine 5.8 %-ige Ammoniumpersulfatlösung (APS-Lösung) mit 84 g pro Stunde und eine 2.68 %-ige Natriumsulfitlösung mit 176 g pro Stunde eingefahren. 25 Minuten später wurde begonnen, eine Mischung von 2.57 kg Vinylacetat und 1.71 kg VIPO 300 mit einer Rate von 2140 g pro Stunde zu dosieren (Monomerdosierung).
Gleichzeitig wurde eine Emulgatordosierung mit einer Dosierleistung von 625 g pro Stunde eingefahren. Die Emulgatordosierung enthielt 385.32 g Wasser, 406.18 g Genapol X 060, und 462.62 g Texapon K12 (10 %-ige wässrige Lösung). Die Gesamtdosierzeit für die Monomerdosierung und die Emulgatordosierungen beliefen sich auf 2 Stunden.
20 min nach dem Reaktionsbeginn wurde die APS-Dosierung auf 126 g pro Stunde, die Na-Sulfit-Dosierung auf 262 g pro Stunde erhöht.
Nach dem Ende der Monomerdosierung bzw. Emulgatordosierung wurde die APS- und Na-Sulfitdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert.
Dispersionsanalysen:
Feststoffgehalt: 50.5 %, pH-Wert: 5.3; Brookfield-Viskosität 20 (Spindel 4): 1040 mPas; MFT: 0°C; Glasübergangstemperatur Tg: 18.4°C; mittlere Teilchengröße: 452.5 nm (Nanosizer) Coulter: Dn 0.124; Dv 1.697; Oberfläche 14.7 m²
Soxhlet - Extraktion: Rückstand vollständig eingedampftes Eluat 1.94 g = 38.8 % (extrahiert aus 5 g eines getrockneten Dispersionsfilms).

### Vergleichsbeispiel 3:(nur öllöslicher Initiator; Batch-Fahrweise, keine Dosierungen)

In einem 20 Liter Druckautoklaven wurden 3.61 kg Wasser, 2.54 kg W 25/140(Polyvinylalkohol, 10 %-ige wässrige Lösung), 481.67 g Genapol X 050 (100 %ig), 54.86 g Texapon K12 (100 %ig), 3.98 g Natriumacetat, 3.04 kg Vinylacetat und 2.03 kg PDMS-Mischung vorgelegt. In der Vorlage befanden sich ferner 21.35 g Tert.Butylperneodecanoat (Trigonox 23, TBPND, 95 %-ig in Aliphaten) und 13.52 g Di-(2-ethylhexyl)peroxydicarbonat (EHPC; 75 %-ig in Aliphaten). Mit 10 %-iger Ameisensäure wurde auf pH = 5 eingestellt. Ferner wurden 10 ml Trilon B (EDTA; 2 %-ige wässrige Lösung) und 31 ml Eisenammonsulfat (1 %-ige Lösung) zugegeben. Der Kessel wurde zum Start der Polymerisation zunächst auf 45°C aufgeheizt. Nach 2 h wurde auf 50°C aufgeheizt. Nach weiteren 2 h wurde die Temperatur auf 55°C erhöht und 2 h lang gehalten.
Nach dem Abkühlen und Entspannen wurde die Dispersion zur Restmonomerminimierung mit Wasserdampf behandelt ("gestrippt") und anschließend mit Hydorol W konserviert. Dispersionsanalysen:
Feststoffgehalt: 46.1 %, pH-Wert: 5.3; Brookfield-Viskosität 20 (Spindel 4): 2690 mPas; MFT: 0°C; Glasübergangstemperatur Tg: 15.6°C; mittlere Teilchengröße: 678.7 nm (Nanosizer) Coulter: Dn 0.0995; Dv 12.67; Oberfläche 3.83 m²
Soxhlet - Extraktion: nicht durchgeführt.
Die Dispersion war instabil und zeigte innerhalb 24 Stunden Phasenseparation!

### Beispiel 4: (Kombination öl-/wasserlöslicher Initiator)

In einem 20 Liter Druckautoklaven wurden 1.17 kg Wasser, 2.78 kg W 25/140(Polyvinylalkohol, 10 %-ige Lösung), 47.33 g Genapol X 050 (100 %-ig), 120.5 g Texapon K12 (10 %-ige wässrige Lösung), 4.37 g Natriumacetat, 556.83 g Vinylacetat, 2230 g VIPO 300 und 41.03 g Trigonox 23 (Tertiärbutylperoxyneodecanoat, TBPND, 95 %ig in Aliphaten - öllöslicher Initiator) vorgelegt. Mit 10 %-iger Ameisensäure wurde auf pH = 5 eingestellt. Ferner wurden 10 ml Trilon B (EDTA; 2 %-ige wässrige Lösung) und 31 ml Eisenammonsulfat (1 %-ige Lösung) zugegeben. Der Kessel wurde auf 70°C aufgeheizt und es wurden 8 bar Stickstoff aufgedrückt. Die Vorlage wurde 30 min anpolymerisiert. Nach diesen 30 min wurde eine 11.2 %-ige tert.-Butylhydroperoxid (TBHP-Lösung) mit 116 g pro Stunde und eine 2.0 %-ige Brüggolitlösung mit 326 g pro Stunde eingefahren. Gleichzeitig wurde begonnen, 2.78 kg Vinylacetat mit einer Rate von 1390 g pro Stunde zu dosieren (Monomerdosierung).
Direkt anschließend wurden die zwei Emulgatordosierungen eingefahren. Die Texapondosierung enthielt 111.37 g Wasser, und 481.99 g Texapon K12 (10 %-ige wässrige Lösung) und wurde mit einer Rate von 297 g/h dosiert. Die Genapoldosierung enthielt 189.32 g Genapol X050 (100 %-ig) und wurde mit einer Rate von 95 g/h dosiert. Die Gesamtdosierzeit für die Monomerdosierung und die Emulgatordosierungen beliefen sich auf 2 Stunden.

Nach dem Ende der Monomerdosierung bzw. Emulgatordosierung wurde die TBHP- und Brüggolitdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert.
Dispersionsanalysen:
Feststoffgehalt: 48.4 %, pH-Wert: 5.5; Brookfield-Viskosität 20 (Spindel 4): 6040 mPas; MFT: nicht ermittelt; Glasübergangstemperatur Tg: 24.5 °C; mittlere Teilchengröße: 643.2 nm (Nanosizer) Coulter: Dn 0.105; Dv 2.790; Oberfläche 9.37 m²; Soxhlet - Extraktion: Rückstand vollständig eingedampftes Eluat 0.44 g = 8.8 % (extrahiert aus 5 g eines getrockneten Dispersionsfilms). 1H-NMR des getrockneten Extrakts: Die Bestandteile sind hauptsächlich Aliphaten (Phlegmatisierungsmittel des Initiators und Initiatorbruchstücke), Schutzkolloid und Emulgator. Es wurde nur eine minimale Menge an Silikon gefunden.
Exzellente Filmeigenschaften (kein Schmieren und Ausschwitzen von Silikon; Dispersionsfilm hat elastische Eigenschaften).

### Beispiel 5: (Dosiervariante während der Anpolymerisation; Kombination öl-/wasserlöslicher Initiator)

In einem 20 Liter Druckautoklaven wurden 974.0 g Wasser, 2.32 kg W 25/140 (Polyvinylalkohol, 10 %-ige Lösung), 39.36 g Genapol X 050, 100.2 g Texapon K12 (10 %-ige wässrige Lösung), 3.63 g Natriumacetat, 1850 g VIPO 300 und 68.24 g Trigonox 23 (Tertiärbutylperoxyneodecanoat, TBPND, 95 %-ig in Aliphaten - öllöslicher Initiator) vorgelegt. Mit 10 %-iger Ameisensäure wurde auf pH = 5 eingestellt. Ferner wurden 10 ml Trilon B (EDTA; 2 %-ige wässrige Lösung) und 31 ml Eisenammonsulfat (1 %-ige Lösung) zugegeben. Der Kessel wurde auf 70°C aufgeheizt und es wurden 8 bar Stickstoff aufgedrückt. Bei Erreichen der 70°C wurde begonnen, 463.1 g Vinylacetat innerhalb einer halben Stunde zuzudosieren. Nach einer weiteren Anpolymerisationszeit von einer halben Stunde wurden 2320 g Vinylacetat (Monomerdosierung) mit einer Rate von 925 g/h dosiert. Die Gesamtdosierzeit der Monomerdosierung belief sich auf 150 min. 30 min nach Dosierbeginn der Monomerdosierung wurde eine 11.2 %-ige tert.-Butyl-hydroperoxid (TBHP-Lösung) mit 97 g pro Stunde und eine 2.0 %-ige Brüggolithlösung mit 271 g pro Stunde eingefahren.
Direkt anschließend wurden die zwei Emulgatordosierungen eingefahren. Die Texapondosierung enthielt 92.6 g Wasser und 400.8 g Texapon K12 (10 %-ige wässrige Lösung) und wurde mit einer Rate von 247 g/h dosiert. Die Genapoldosierung enthielt 157.44 g Genapol X050 (100 %-ig) und wurde mit einer Rate von 79 g/h dosiert. Die Gesamtdosierzeit für die Emulgatordosierungen beliefen sich auf 2 Stunden.
Nach dem Ende der Emulgatordosierung wurde die TBHP- und Brüggolitdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert.
Dispersionsanalysen:
Feststoffgehalt: 45.8 %, pH-Wert: 5.1; Brookfield-Viskosität 20 (Spindel 4): 1800 mPas; MFT: 0°C; Glasübergangstemperatur Tg: 21.0 °C; mittlere Teilchengröße: 1153.8 nm (Nanosizer) Coulter: Dn 0.0979; Dv 3.834; Oberfläche 5.93 m²;
Soxhlet - Extraktion: Rückstand vollständig eingedampftes Eluat 0.32 g = 5.4 % (extrahiert aus 5 g eines getrockneten Dispersionsfilms). 1H-NMR des getrockneten Extrakts: Die Bestandteile sind hauptsächlich Aliphaten (Phlegmatisierungsmittel des Initiators und Initiatorbruchstücke), Schutzkolloid und Emulgator. Es wurde nur eine verschwindend geringe Menge an Silikon gefunden, d.h. das gesamte Silikonmakromer ist praktisch einpolymerisiert.
Exzellente Filmeigenschaften (kein Schmieren und Ausschwitzen von Silikon; Dispersionsfilm hat elastische Eigenschaften).

### Beispiel 6: (mit PEG-PPG-Allylether)

In einem 20 Liter Druckautoklaven wurden 1.16 kg Wasser, 2.77 kg W 25/140(Polyvinylalkohol 10 %-ige Lösung), 47.07 g Genapol X 050 (100 %-ig), 119.84 g Texapon K12 (10 %-ige wässrige Lösung), 4.34 g Natriumacetat, 553.77 g Vinylacetat, 2220 g VIPO 300, 50.39 g Polyglycol A20-20 (100 %g, Polyethylenoxid-Polypropylenoxid-Allylether) und 41.03 g Trigonox 23 (Tertiärbutylperoxyneodecanoat, TBPND, 95 %-ig in Aliphaten - öllöslicher Initiator) vorgelegt. Mit 10 %-iger Ameisensäure wurde auf pH = 5 eingestellt. Ferner wurden 10 ml Trilon B (EDTA; 2 %-ige wässrige Lösung) und 31 ml Eisenammonsulfat (1 %-ige Lösung) zugegeben. Der Kessel wurde auf 70°C aufgeheizt und es wurden 8 bar Stickstoff aufgedrückt. Die Vorlage wurde 30 min anpolymerisiert. Nach diesen 30 min wurde eine 11.2 %-ige tert.Butylhydroperoxid (TBHP-Lösung) mit 116 g pro Stunde und eine 2.0 %-ige Brüggolitlösung mit 326 g pro Stunde eingefahren. Gleichzeitig wurde begonnen, eine Mischung aus 2.49 kg Vinylacetat und 226.49 g Polyglycol A20-20 (Polyethylenoxid-Polypropylenoxid-Allylether) mit einer Rate von 1360 g pro Stunde zu dosieren (Monomerdosierung).
Direkt anschließend wurden die zwei Emulgatordosierungen eingefahren. Die Texapondosierung enthielt 110.75 g Wasser und 479.35 g Texapon K12 (10 %-ige wässrige Lösung) und wurde mit einer Rate von 296 g/h dosiert. Die Genapoldosierung enthielt 188.3 g Genapol X050 und wurde mit einer Rate von 95 g/h dosiert. Die Gesamtdosierzeit für die Monomerdosierung und die Emulgatordosierungen beliefen sich auf 2 Stunden.
Nach dem Ende der Monomerdosierung bzw. Emulgatordosierung wurde die TBHP- und Brüggolithdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert.
Dispersionsanalysen:
Feststoffgehalt: 48.8 %, pH-Wert: 5.0; Brookfield-Viskosität 20 (Spindel 4): 30850 mPas; MFT: 0°C; Glasübergangstemperatur Tg: 9.7 °C; mittlere Teilchengröße: 508.3 nm (Nanosizer) Coulter: Dn 0.0962; Dv 11.50; Oberfläche 4.7 m²;
Soxhlet - Extraktion: Rückstand vollständig eingedampftes Eluat 0.355 g = 7.1 % (extrahiert aus 5 g eines getrockneten Dispersionsfilms). Exzellente Filmeigenschaften (kein Schmieren und Ausschwitzen von Silikon; Dispersionsfilm hat elastische Eigenschaften).

### Vergleichsbeispiel 7: (ohne Silikonmakromer)

Wie Beispiel 6 jedoch ohne VIPO 300, d.h. die Polymerisation wurde ohne ein Silikonmakromer durchgeführt. Dispersionsanalysen:
Feststoffgehalt: 48.1 %, pH-Wert: 5.5; Brookfield-Viskosität 20 (Spindel 4): 1240 mPas; MFT: nicht ermittelt; Glasübergangstemperatur Tg: 13.4°C; mittlere Teilchengröße: 1094.1 nm (Nanosizer) Coulter: Dn 0.106; Dv 3.322; Oberfläche 6.06 m². Soxhlet - Extraktion: Rückstand vollständig eingedampftes Eluat 0.30 g = 6.0 % (extrahiert aus 5 g eines getrockneten Dispersionsfilms).

### Beispiel 8: (funktionelles Comonomer)

Wie Beispiel 6 jedoch mit NMA (N-Methylolacrylamid). 57.08 g NMA wurden in die Vorlage gegeben, 228.34 g NMA wurden mit der Texapondosierung zudosiert. Als Silikonmakromer wurde VIPO 200 anstelle VIPO 300 verwendet.
Das Endprodukt mit einem Festgehalt von 47.0 % hatte eine Viskosität (Brookfield 20, Spindel 6) von 25800 mPas.
Nach dem Verdünnen mit Wasser auf 29.7 % stellte sich eine Brookfield-Viskosität 20 (Spindel 2) von 204 mPas ein.
Dispersionsanalysen:
Feststoffgehalt: 29.7 %, pH-Wert: 6.1; Brookfield-Viskosität 20 (Spindel 2): 204 mPas; MFT: nicht ermittelt; Glasübergangstemperatur Tg: 5.65°C; mittlere Teilchengröße: 1118.0 nm (Nanosizer) Coulter: Dn 4.554; Dv 6.010; Oberfläche 1.11 m². Soxhlet - Extraktion: Rückstand vollständig eingedampftes Eluat 0.495 g = 9.9 % (extrahiert aus 5 g eines getrockneten Dispersionsfilms).

### Beispiel 9: (funktionelles Comonomer)

Wie Beispiel 6 jedoch mit 55.24 g Acrylsäure (11.05 g in der Vorlage, 44.19 g in der Monomerdosierung). Als Silikonmakromer wurde VIPO 200 anstelle VIPO 300 verwendet.
Dispersionsanalysen:
Feststoffgehalt: 48.6 %, pH-Wert: 5.4; Brookfield-Viskosität 20 (Spindel 2): 9600 mPas; MFT: 1°C; Glasübergangstemperatur Tg: nicht ermittelt; mittlere Teilchengröße: 322.0 nm (Nanosizer); Coulter: Dn 0.102; Dv 43.45; Oberfläche 6.06 m².
Soxhlet - Extraktion: Rückstand vollständig eingedampftes Eluat 0.485 g = 9.7 % (extrahiert aus 5 g eines getrockneten Dispersionsfilms).

### Beispiel 10: (Vinylacetat-Ethylen-Mischpolymerisat)

In einem 20 Liter Druckautoklaven wurden 1.68 kg Wasser, 2.43 kg W 25/140 (Polyvinylalkohol, 10 %-ige Lösung), 41.24 g Genapol X 050 (100 %-ig), 105.0 g Texapon K12 (10 %-ige wässrige Lösung), 3.80 g Natriumacetat, 485.2 g Vinylacetat, 1940 g VI-PO 300 und 35.75 g Trigonox 23 (Tertiärbutylperoxyneodecanoat, TBPND, 95 %-ig in Aliphaten) vorgelegt. Mit 10 %-iger Ameisensäure wurde auf pH = 5 eingestellt. Ferner wurden 10 ml Trilon B (EDTA; 2 %-ige wässrige Lösung) und 31 ml Eisenammonsulfat (1 %-ige Lösung) zugegeben. Der Kessel wurde auf 70°C aufgeheizt und es wurden 20 bar Ethylen aufgedrückt, dieser Druck wurde bis zum Dosierende der Monomerdosierung gehalten. Die Vorlage wurde 30 min anpolymerisiert. Nach diesen 30 min wurde eine 11.2 %-ige tert.-Butyl-hydroperoxid (TBHP-Lösung) mit 96 g pro Stunde und eine 2.0 %-ige Brüggolitlösung mit 269 g pro Stunde eingefahren. Gleichzeitig wurde begonnen 2.43 kg Vinylacetat mit einer Rate von 1215 g pro Stunde zu dosieren (Monomerdosierung).
Direkt anschließend wurden die zwei Emulgatordosierungen eingefahren. Die Texapondosierung enthielt 97.04 g Wasser, und 419.99 g Texapon K12 (10 %-ige wässrige Lösung) und wurde mit einer Rate von 259 g/h dosiert. Die Genapoldosierung enthielt 164.97 g Genapol X050 (100 %-ig) und wurde mit einer Rate von 83 g/h dosiert. Die Gesamtdosierzeit für die Monomerdosierung und die Emulgatordosierungen beliefen sich auf 2 Stunden.
Nach dem Ende der Monomerdosierung bzw. Emulgatordosierung wurde die TBHP- und Brüggolitdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert.
Das Endprodukt mit einem Festgehalt von 48.0 % hatte eine Viskosität (Brookfield 20, Spindel 6) von 36600 mPas.
Nach dem Verdünnen mit Wasser auf 34.6 % stellte sich eine Brookfield-Viskosität 20 (Spindel 2) von 810 mPas ein.

### Dispersionsanalysen:

Feststoffgehalt: 34.6 %, pH-Wert: 5.7; Brookfield-Viskosität 20 (Spindel 4): 810 mPas; MFT: 0°C; Glasübergangstemperatur Tg: -1.3 °C; mittlere Teilchengröße: 670.6 nm (Nanosizer); Coulter: Dn 0.139; Dv 1.151; Oberfläche 14.9 m²;
Soxhlet - Extraktion: Rückstand vollständig eingedampftes Eluat 0.30 g = 6.0 % (extrahiert aus 5 g eines getrockneten Dispersionsfilms). 1H-NMR des getrockneten Extrakts: Die Bestandteile sind hauptsächlich Aliphaten (Phlegmatisierungsmittel des Initiators und Initiatorbruchstücke), Schutzkolloid und Emulgator. Es wurde kein Silikon gefunden, d.h. das gesamte Silikonmakromer ist einpolymerisiert.
Exzellente Filmeigenschaften (kein Schmieren und Ausschwitzen von Silikon; Dispersionsfilm hat elastische und aufgrund der niedrigen Tg leicht klebende Eigenschaften).

### Anwendungstechnischer Test (Soxhlet Extraktion):

Von den Dispersionen wurde jeweils ein Film aufgezogen und vollständig getrocknet. Von diesen Filmen wurden jeweils exakt 5.0 g entnommen und in eine Soxhlet-Extraktionsapparatur gegeben. Als Extraktionsmittel wurden 50 g Cyclohexan verwendet. Cyclohexan ist ein sehr gutes Lösungsmittel für Silikone und vermag freies Silikon aus einem Dispersionsfilm vollständig herauszuextrahieren. Die Soxhlet-Extraktion wurde 8 h lang unter Rückfluß betrieben. Nach der Extraktion wurde das gesammelte Eluat (mit den aus den Dispersionsfilmen extrahierten Bestandteilen) im Rotationsdampfer vollständig eingedampft. Der Rückstand wurde bei Bedarf mit Hilfe der 1H-NMR-Spektroskopie auf seine Zusammensetzung geprüft.
Der Rückstand des Eluats wurde auf die Masse des getrockneten Dispersionsfilm, der extrahiert wurde, bezogen (hier 5.0 g) und es wurde der Prozentwert berechnet.
Fazit: Je höher der extrahierbare Anteil in % aus einem Dispersionsfilm ist, desto weniger Silikonmakromer wurde bei der Emulsionspolymerisation angeknüpft.
Die Ergebnisse sind in Tabelle 1 zusammengefasst:

Auswertung der Versuchsergebnisse:

Die Vergleichsbeispiele V1 und V2 zeigen, dass mit dem ausschließlichen Einsatz von wasserlöslichen Initiatoren eine ungenügende Anknüpfung der Silikonmakromeren an organisches Monomer bei der Emulsionspolymerisation erfolgt. Bei der Extraktion können hier aus einem getrockneten Dispersionsfilm weit mehr als 30 % herausgewaschen werden. Die 1H-NMR-Spektroskopie belegt, dass es sich bei den extrahierbaren Bestandteilen hierbei zum größten Teil um freies Silikonmakromer handelt. Vergleichsbeispiel V3 zeigt, dass sich bei der Verwendung von ausschließlich öllöslichen Initiatoren eine ungenügende Stabilität der Dispersion einstellt. In diesem Fall ergab sich nach kurzer Zeit eine Phasenseparation.
Bei den Beispielen 4 und 6, sowie 8 und 10 wurde mit einer Kombination von wasserlöslichen und öllöslichen Initiatoren gearbeitet. Aus den Filmen dieser Dispersionen konnte nur eine geringe Menge an Bestandteilen extrahiert werden, die auf unter 10 % belief. Damit ist bewiesen, dass mit dieser erfindungsgemäßen Vorgehensweise eine sehr effektive Anknüpfung von Silikonmakromeren an organisches Monomer bei der Emulsionspolymerisation möglich wird.
Der Vergleich von Beispiel 4 mit Beispiel 5 belegt, dass mit der Erhöhung des Anteils an öllöslichem Initiator (von 0.7 bei Bsp. 4, auf 1.4 T. bei Beispiel 5) eine effektivere und vollständigere Copolymerisation von Silikonmakromeren mit organischen Monomeren ermöglicht wird. So waren bei dem Film der Dispersion aus Bsp. 5 nur 5.4 % extrahierbar, während sich die extrahierbaren Bestandteile bei dem Film der Dispersion aus Bsp. 4 auf 8.8 % beliefen.
Auch bei der Anwesenheit von Hilfsmonomeren, polymeriserbaren Emulgatoren oder Schutzkolloiden wird mit der Kombination von öl- und wasserlöslichen Initiatoren eine sehr gute Copolymerisation bzw. eine sehr gute Anknüpfung von Silikonmakromeren mit organischen Monomeren bei der Emulsionspolymerisation erzielt, was die Beispiele 6, 8 und 9 belegen.
Bei den Blindwerten ohne Silikonmakromer konnten bei Vergleichsbeispiel V7 6.0 % an Bestandteilen aus den Dispersionsfilmen extrahiert werden. Hier wurden Emulgatoren, Schutzkolloide, Initiatorbruchstücke und Phlegmatisierungsmittel (z.B.
Aliphaten des Initiators) extrahiert, was mit der 1H-NMR-Spektroskopie am getrockneten Rückstand nachgewiesen wurde. Das 1H-NMR-Spektrum lieferte bei dem getrockneten Rückstand des Eluats nach der Extraktion in diesen Fällen keinerlei Hinweise auf freies Silikon. Auch bei Bsp. 5 war praktisch das gesamte Silikonmakromer copolymerisert, und bei den anderen Beispielen lag nur eine minimale Menge freies Silikonmakromer vor. Dies dokumentiert erneut die hervorragende Copolymerisation der Silikonmakromeren mit organischen Monomeren mit dem erfindungsgemäßen Verfahren.

**Tabelle 1:**

| Beispiel | H₂O-lösl. Initiator | Öllösl. Initiator | Silikonanteil [T] | Hilfs/Co-monomer [T] | Extrakt [%] |
|---|---|---|---|---|---|
| V1 | + | - | 40 DEH 929 | - | 42.8 |
| V2 | + | - | 40 VIPO 300 | - | 38.8 |
| V3 | - | + | 40 DEH 929 | - | instabil |
| 4 | + | + | 40 VIPO 300 | - | 8.8 |
| 5 | + | + | 40 VIPO 300 | - | 5.4 |
| 6 | + | + | 40 VIPO 300 | 5 PG A-20 | 7.1 |
| V7 | + | + | 0 | 10 PG A-20 | 6.0 |
| 8 | + | + | 40 VIPO 200 | 3 NMA | 9.9 |
| 9 | + | + | 40 VIPO 200 | 1 Acrylsäure | 9.7 |
| 10 | + | + | 40 VIPO 300 | 15 Ethylen | 6.0 |

## Patentansprüche

1. Verfahren zur Herstellung von silikonhaltigen Mischpolymerisaten aus ethylenisch ungesättigtem Organomonomer und Silikonmakromer in Form deren wässrigen Polymerdispersionen oder in Wasser redispergierbaren Polymerpulvern mittels radikalisch initiierter Polymerisation in wässrigem Medium und gegebenenfalls Trocknung der damit erhältlichen Polymerdispersion, **dadurch gekennzeichnet, dass** der Anteil an Silikonmakromer und ein Teil der ethylenisch ungesättigten Organomonomere vorgelegt wird und die Polymerisation in Gegenwart eines öllöslichen Initiators mit einer Linlichheit in Wasser unter Normalbelingenge von <1 Gew.-% gestartet wird, und anschließend der Restanteil des ethylenisch ungesättigten Organomonomers und ein wasserlöslicher Initiator mit einer Linlichheit in Wasser unter Normalbedingungen von >10 Gew.-% zugegeben werden.

2. Verfahren nach Anspruch 1, **dadurch gekennzeichnet, dass** die Vorlage bis zu einem Umsatz von 10 bis 100 % auspolymerisiert wird, danach die restlichen Monomeren zudosiert werden und mit wasserlöslichem Initiator, der ebenfalls zudosiert wird, polymerisiert werden.

3. Verfahren nach Anspruch 1 bis 2, **dadurch gekennzeichnet, dass** als ethylenisch ungesättigte Organomonomere ein oder mehrere Monomere eingesetzt werden, aus der Gruppe umfassend Vinylester von unverzweigten oder verzweigten Alkylcarbonsäuren mit 1 bis 15 C-Atmen, Methacrylsäureester und Acrylsäureester von Alkoholen mit 1 bis 15 C-Atomen, Vinylaromaten, Olefine, Diene und Vinylhalogenide.

4. Verfahren nach Anspruch 1 bis 3, **dadurch gekennzeichnet, dass** als Silikonmakromere ein oder mehrere eingesetzt werden, aus der Gruppe umfassend lineare, verzweigte und cyclische Silikone mit mindestens 10 Siloxanwiederholungsein-heiten und mit mindestens einer radikalisch polymerisierbaren funktionellen Gruppe.

5. Verfahren nach Anspruch 1 bis 4, **dadurch gekennzeichnet, dass** als Silikonmaknomere ein oder mehrere eingesetzt werden, aus der Gruppe umfassend Silikone mit der allgemeinen Formel R¹ₐR₃₋ₐSiO(SiR₂O)ₙSiR₃₋ₐR¹ₐ, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, und n = 10 bis 1000 beträgt.

6. Verfahren nach Anspruch 5, **dadurch gekennzeichnet, dass** Vinylacetat oder ein Gemisch aus Vinylacetat und Ethylen mit einem Silikonmakromer aus der Gruppe umfassend α,ω-Divinyl-Polydimethylsiloxan, α,ω-Di-(3-acryloxypropyl)-Polydimethylsiloxan und α,ω-Di-(3-methacryloxypropyl)-Polydimethylsiloxan copolymerisiert wird.

7. Verfahren nach Anspruch 1 bis 6, **dadurch gekennzeichnet, dass** ein oder mehrere Hilfsmonomere aus der Gruppe umfassend vorvernetzende oder nachvernetzende Comonomere eingesetzt werden.

8. Verwendung der Verfahrensprodukte aus Anspruch 1 bis 7 in Klebemitteln, Beschichtungsmitteln, und als Bindemittel zur Verfestigung von partikulären Materialien.

9. Verwendung der Verfahrensprodukte aus Anspruch 1 bis 7 als Modifizierungsmittel, Hydrophobierungsmittel, Poliermittel, Trennmittel, sowie als Additiv in Lacken und kosmetischen Formulierungen.

10. Verwendung der Verfahrensprodukte aus Anspruch 1 bis 7 zur Textilbehandlung, Textilbeschichtung, Textilausrüstung oder Textil-Finishing, sowie im Bereich Fabric Care.

11. Verwendung der Verfahrensprodukte aus Anspruch 1 bis 7 als als Bindemittel im Baubereich für Anstrich-, Klebe- und Beschichtungsmittel.

## Claims

1. Process for preparing silicone-containing copolymers of an ethylenically unsaturated organic monomer and a silicone macromer in the form of their aqueous polymer dispersions or water-redispersible polymer powders by means of free-radically initiated polymerization in an aqueous medium and, if appropriate, drying of the polymer dispersion obtainable in this way, **characterized in that** the proportion of silicone macromer and part of the ethylenically unsaturated organic monomers are initially charged and the polymerization is started in the presence of an oil-soluble initiator having a solubility in water under normal conditions of < 1% by weight, and the remainder of the ethylenically unsaturated organic monomer and a water-soluble initiator having a solubility in water under normal conditions of >10% by weight are subsequently added.

2. Process according to claim 1, **characterized in that** the initial charge is polymerized to a conversion of from 10 to 100%, the remaining monomers are then metered in and polymerized by means of a water-soluble initiator which is likewise fed in.

3. Process according to any of claims 1 to 2,
**characterized in that** one or more monomers from the group consisting of vinyl esters of unbranched or branched alkylcarboxylic acids having from 1 to 15 carbon atoms, methacrylic esters and acrylic esters of alcohols having from 1 to 15 carbon atoms, vinylaromatics, olefins, dienes and vinyl halides are used as ethylenically unsaturated organic monomers.

4. Process according to any of claims 1 to 3,
**characterized in that** one or more compounds from the group consisting of linear, branched and cyclic silicones having at least 10 siloxane repeating units and having at least one free-radically polymerizable functional group are used as silicone macromers.

5. Process according to any of claims 1 to 4,
**characterized in that** one or more compounds from the group consisting of silicones having the general formula R¹ₐR₃₋ₐSiO(SiR₂O)ₙSiR₃₋ₐR¹ₐ, where the radicals R are identical or different and are each a monovalent, substituted or unsubstituted alkyl radical or alkoxy radical having from 1 to 18 carbon atoms, R¹ is a polymerizable group, a is 0 or 1 and n = 10 to 1000, are used as silicone macromers.

6. Process according to claim 5, **characterized in that** vinyl acetate or a mixture of vinyl acetate and ethylene is copolymerized with a silicone macromer from the group consisting of (α,ω-divinylpolydimethylsiloxane, α,ω-di(3-acryloxypropyl)polydimethylsiloxane and α,ω-di(3-methacyloxypropyl)polydimethylsiloxane.

7. Process according to any of claims 1 to 6,
**characterized in that** one or more auxiliary monomers from the group consisting of precrosslinking or postcrosslinking comonomers are used.

8. Use of the process products from any of claims 1 to 7 in adhesives, coating compositions and as binder for consolidating particulate materials.

9. Use of the process products from any of claims 1 to 7 as modifiers, hydrophobicizing agents, polishes, release agents and as additives in surface coating compositions and cosmetic formulations.

10. Use of the process products from any of claims 1 to 7 for textile treatment, textile coating, textile dressing and textile finishing and also in the fabric care sector.

11. Use of the process products from any of claims 1 to 7 as binders in the building sector for paints, adhesives and coating compositions.

## Revendications

1. Procédé pour la préparation de copolymères contenant du silicone à partir de monomères organiques éthyléniquement insaturés et de macromères de silicone sous forme de leurs dispersions polymères aqueuses ou sous forme de poudres polymères redispersibles dans l'eau par une polymérisation initiée par voie radicalaire dans un milieu aqueux et le cas échéant séchage de la dispersion polymère ainsi obtenue, **caractérisé en ce que** la proportion de macromère de silicone et une partie des monomères organiques éthyléniquement insaturés sont chargées au préalable et que la polymérisation est démarrée en présence d'un initiateur soluble dans l'huile présentant une solubilité dans l'eau dans des conditions normales < 1% en poids puis la partie résiduelle des monomères organiques éthyléniquement insaturés et un initiateur soluble dans l'eau présentant une solubilité dans l'eau dans des conditions normales > 10% en poids sont ajoutés.

2. Procédé selon la revendication 1, **caractérisé en ce que** la charge préalable est polymérisée jusqu'à une transformation de 10 à 100%, puis les monomères résiduels sont ajoutés en dosant et polymérisés avec l'initiateur soluble dans l'eau qui est également ajouté en dosant.

3. Procédé selon les revendications 1 à 2,
**caractérisé en ce qu'**on utilise comme monomères organiques éthyléniquement insaturés un ou plusieurs monomères du groupe comprenant les esters vinyliques d'acides alkylcarboxyliques non ramifiés ou ramifiés comprenant 1 à 15 atomes de carbone, les esters de l'acide méthacrylique et les esters de l'acide acrylique d'alcools comprenant 1 à 15 atomes de carbone, les aromatiques de vinyle, les oléfines, les diènes et les halogénures de vinyle.

4. Procédé selon les revendications 1 à 3,
**caractérisé en ce qu'**on utilise comme macromères de silicone un ou plusieurs macromères du groupe comprenant les silicones linéaires, ramifiés et cycliques comprenant au moins 10 unités répétitives de type siloxane et présentant au moins un groupe fonctionnel polymérisable par voie radicalaire.

5. Procédé selon les revendications 1 à 4,
**caractérisé en ce qu'**on utilise comme macromères de silicone un ou plusieurs macromères du groupe comprenant les silicones de formule générale R¹ₐR₃₋ₐSiO(SiR₂O)ₙSiR₃₋ₐR¹ₐ, où R est identique ou différent et signifie un radical alkyle ou alcoxy monovalent, le cas échéant substitué, comprenant à chaque fois 1 à 18 atomes de carbone, R¹ signifie un groupe polymérisable, a vaut 0 ou 1, et n = 10 à 1 000.

6. Procédé selon la revendication 5, **caractérisé en ce qu'**on copolymérise de l'acétate de vinyle ou un mélange d'acétate de vinyle et d'éthylène avec un macromère de silicone du groupe comprenant l'α,ω-divinyl-polydiméthylsiloxane, l'α,ω-di-(3-acryloxypropyl)-polydiméthylsiloxane et l'α,ω-di-(3-méthacryloxypropyl)-polydiméthylsiloxane.

7. Procédé selon les revendications 1 à 6, **caractérisé en ce qu'**on utilise un ou plusieurs monomères auxiliaires du groupe comprenant les comonomères de préréticulation ou de post-réticulation.

8. Utilisation des produits du procédé selon les revendications 1 à 7 dans des adhésifs, des agents de revêtement, et comme liants pour le durcissement de matériaux particulaires.

9. Utilisation des produits du procédé selon les revendications 1 à 7 comme agent de modification, d'hydrofugation, de polissage, de séparation ainsi que comme additif dans les laques et les formulations cosmétiques.

10. Utilisation des produits du procédé selon les revendications 1 à 7 pour le traitement du textile, le revêtement du textile, l'apprêt de textile ou la finition de textile ainsi que dans le domaine de l'entretien des tissus (Fabric Care).

11. Utilisation des produits du procédé selon les revendications 1 à 7 comme liants dans le domaine de la construction pour des agents d'enduction, adhésifs et de revêtement.
